# EUROPEAN PATENT APPLICATION

(11) **EP 3 982 145 A1**
(43) Date of publication of application: **13.04.2022**
(21) Application number: 21198661.7
(22) Date of filing: 23.09.2021
(51) Int. Cl.: G01S 1/02, G01S 1/74, G01S 5/02, G01S 5/18, G01S 11/02, G01S 11/14

(54) **INDOOR LOCATION SYSTEM**

(30) Priority: 12.10.2020 GB 202016161
(71) Applicant: AeroScout Ltd, 7403635 Ness-Ziona (IL)
(72) Inventor: AMSALEM, Mr Reuven, 7403635 Ness Ziona (IL); MATZA, David, Ramat Gan (IL)
(74) Representative: SBD IPAdmin

(57) **Abstract**

An indoor location system for locating at least one mobile device comprises a plurality of acoustic wave emitters, a plurality of electromagnetic emitters, and at least one mobile device. Each acoustic wave emitter is configured to emit an acoustic wave having at least one acoustic wave frequency and wavelength. Each electromagnetic emitter is configured to emit an electromagnetic signal that includes electromagnetic emitter data related to that electromagnetic emitter and data indicative of a frequency and/or wavelength of an acoustic wave emitted by a said acoustic wave emitter that is associated with that electromagnetic emitter. The mobile device is configured to detect the acoustic waves and to receive the electromagnetic signals, and to determine the at least one frequency and/or wavelength of a detected acoustic wave and to compare the determined acoustic wave frequency and/or wavelength with the data included in each received electromagnetic signal, thereby to determine which received electromagnetic emitter data was included in the electromagnetic signal which also included the data indicative of the at least one frequency and/or wavelength of the detected acoustic wave.

## Description

The present invention relates to location systems, especially to so-called real time locations systems (RTLS), in which mobile devices such as tags, transponders and/or mobile communications devices are located, and preferably tracked, by means of wireless signal transmissions. The invention particularly relates to indoor location systems, i.e. location systems arranged to locate mobile devices within buildings.

Such location systems are used for locating, and preferably tracking, articles and/or people associated with respective wireless mobile devices. Location systems are used in a wide range of environments, including hospitals and other healthcare situations, social care environments, prisons, industrial locations, warehouses, retail stores, educational institutions, offices and logistics environments, for example. Such systems are used for locating and tracking patients (especially babies and the elderly) and other categories of people, and for locating and tracking medical supplies, equipment, products, tools and other categories of articles.

Location systems use one or more of a variety of wireless technologies, including: wireless local area network (WLAN) technologies; wireless personal area network (WPAN) technologies (including low-rate wireless personal area network (LR-WPAN) technologies); radio frequency identification (RFID); ultra-wideband (UWB); ultrasound; sound; infrared; visible light; camera vision, etc. Included in WLAN technologies are those conforming to the Institute of Electrical and Electronics Engineers (IEEE) 802.11 series of standards (e.g. Wi-Fi (TM)). Included in WPAN and LR-WPAN technologies are those conforming to the IEEE 802.15 series of standards (e.g. Bluetooth (TM), ZigBee (TM), etc.).

The mobile devices which are located and tracked in location systems may, for example, be tags, transponders or mobile communications and/or computer devices, and they may be active and/or passive. For example, active mobile devices may function as "beacons" which periodically emit wireless signals indicating their presence. Passive mobile devices may, for example, function as transponders, only emitting wireless signals in response to wireless signals emitted by wireless emitters of the location system. Some mobile devices may function sometimes as passive devices and at other times as active devices. Depending upon their functionality, the mobile devices may be self-powered (e.g. battery powered) or may obtain their power from the wireless signals emitted by wireless emitters of the location system. Mobile communications devices used in location systems include, for example: mobile (e.g. cellular) telephones, including smart phones; portable computer devices, e.g. tablet computers, laptop computers, handheld computers, personal digital assistants (PDAs), GPS devices; etc.

As the skilled person knows, location systems use a variety of techniques for calculating the locations of mobile devices. For example, some location systems use measured time of flight, e.g. the times at which wireless transmissions are received (i.e. time-of-arrival (TOA) information), for example in order to calculate differences in times-of-arrival between different wireless receivers or transmitters and to use the calculated time-difference-of-arrival (TDOA) information to calculate the locations of mobile devices. Additionally or alternatively, location systems may use received signal strengths (e.g. received signal strength indication, RSSI), and/or angle of arrival (AOA) information, and/or round-trip time (RTT) information, radio map fingerprinting information, location information from nearby tags/transponders, satellite location information, etc. Additionally or alternatively, in some location systems the mobile devices themselves perform at least part of the location calculations.

A problem associated with known indoor location systems is how to determine which room of a building a particular mobile device is located in - i.e. room discrimination. (By a "room" is meant an area of a building separated from other areas of the building by one or more internal walls, and by one or more floors/ceilings if the building has more than a single storey. Corridors, hallways, vestibules, stairwells, etc. are thus regarded as being "rooms" herein.) This is problematic for radio frequency (RF) location systems, because the radio frequency signals normally propagate through the internal walls, floors and ceilings in a building. For this reason, other technologies, such as ultrasound or infrared, are used for room discrimination. However, the known use of non-radio frequency technologies in conjunction with radio frequency systems can add cost and complexity to the location system.

There is therefore a need for an efficient and cost-effective indoor location system which enables room discrimination.

In a first aspect, the present invention provides a location system according to Claim 1 of the appended claims.

A second aspect of the invention provide a location method according to Claim 16.

A third aspect of the invention provides a plurality of acoustic wave emitters and electromagnetic emitters configured for use in the location system or method of the invention.

It is to be understood that any feature, including any preferred feature, of an aspect of the invention may be a feature, including a preferred feature, of any other aspect of the invention. The following description concerns all aspects of the invention. References to the location system also apply to the method of locating a mobile device, and vice versa.

The first aspect of the invention provides an indoor location system for locating at least one mobile device (preferably a plurality of mobile devices), comprising a plurality of acoustic wave emitters, a plurality of electromagnetic emitters, and at least one mobile device; wherein: (a) each acoustic wave emitter is configured to emit an acoustic wave having at least one acoustic wave frequency and wavelength; (b) each electromagnetic emitter is configured to emit an electromagnetic signal that includes electromagnetic emitter data related to that electromagnetic emitter and data indicative of at least one frequency and/or wavelength of an acoustic wave emitted by a said acoustic wave emitter that is associated with that electromagnetic emitter; and (c) the mobile device is configured to detect the acoustic waves and to receive the electromagnetic signals, and to determine the at least one frequency and/or wavelength of a detected acoustic wave and to compare the determined at least one acoustic wave frequency and/or wavelength with the data included in each received electromagnetic signal, thereby to determine which received electromagnetic emitter data was included in the electromagnetic signal which also included the data indicative of the at least one frequency and/or wavelength of the detected acoustic wave.

The, or each, mobile device is configured to detect the acoustic waves and to receive the electromagnetic signals. Because electromagnetic signals, e.g. RF signals, can frequently propagate through walls, floors and ceilings, the mobile device(s) may receive electromagnetic signals from not only the room or other location (e.g. hospital bay) where it is currently located, but also from outside that room or location, e.g. in one or more neighbouring rooms. However, acoustic waves, e.g. ultrasound acoustic waves, are often unable to propagate through walls, floors and ceilings, and therefore the mobile device(s) may detect only the acoustic wave emitted by the acoustic wave emitter located in the room or location where the mobile device is currently located (e.g. the same room). By "matching" the at least one frequency and/or wavelength of the detected acoustic wave with the particular electromagnetic emitter data which contained the indication of that particular at least one acoustic wave frequency/wavelength, the mobile device thereby determines its current location, e.g. room location. The use of the simple determination of at least one frequency or wavelength of a detected acoustic wave (e.g. ultrasound) provides a particularly efficient and cost-effective indoor location system which provides the possibility of room discrimination.

In preferred embodiments of the invention, each acoustic wave emitter is an ultrasound emitter and each acoustic wave is an ultrasound wave. Ultrasound frequencies generally range from approximately 20 kHz and higher. A preferred range of ultrasound frequencies used in the present invention is 20kHz to 70kHz, more preferably 20kHz to 50kHz. Different ultrasound frequencies used in the invention (e.g. in different rooms in a building) may, for example, differ by0.5kHz to 10kHz, e.g. they may differ by approximately: 0.5kHz, 1kHz, 1.5kHz, 2kHz, 3kHz, 4kHz, 5kHz, 7kHz, or 10kHz, etc.

Preferably, each acoustic wave is a continuous wave having substantially a single frequency and a single wavelength, e.g. on a single channel. Additionally or alternatively, each acoustic wave may comprise a range or chirp, or other plurality, of frequencies and wavelengths. The, or each, acoustic wave may be emitted at least for a duration of time, e.g. for a predetermined period of time, or periodically, for example. Consequently, the determination of at least one acoustic wave frequency and/or wavelength can, in at least some embodiments of the invention, comprise the determination of a plurality of frequencies and/or wavelengths, for example a range of acoustic wave frequencies and/or wavelengths, e.g. of a chirp of acoustic wave frequencies/wavelengths. In some embodiments, the determination may be of a chirp signature, e.g. a specific range of frequencies and/or wavelengths having a specific rate of increase and/or decrease.

The, or each, mobile device preferably is configured to sample the detected acoustic wave(s), e.g. for a specific duration, and preferably is configured to analyse the acoustic wave(s), e.g. using Fast Fourier Transform and/or match filtering, e.g. to determine the frequency or frequencies and/or wavelength(s) of the acoustic wave(s), and preferably to determine the acoustic wave received signal strength indication (RSSI).

In preferred embodiments of the invention, each electromagnetic emitter is a radio frequency (RF) electromagnetic emitter, e.g. a near-field RF emitter and/or a far-field RF emitter, more preferably an electromagnetic inductor and/or a magnetic inductor and/or a radio wave emitter. Each electromagnetic emitter preferably is configured to emit its electromagnetic signal periodically and/or upon activation or "waking up".

Preferably, each electromagnetic emitter is a low frequency (LF) electromagnetic emitter (e.g. operating at 125 kHz) and/or a Bluetooth Low Energy (BLE) emitter (e.g. operating at 2.4 GHz), and each electromagnetic signal preferably is a low frequency (LF) signal or a Bluetooth Low Energy (BLE) signal.

The electromagnetic emitter data related to each electromagnetic emitter preferably comprises data identifying that electromagnetic emitter and/or the physical location of that electromagnetic emitter, for example a room or bay where the electromagnetic emitter is located.

In preferred embodiments of the invention, the location system, preferably the, or each, mobile device, is configured to determine the identity and/or the physical location, preferably the room or bay location, of the electromagnetic emitter which is associated with the acoustic wave emitter whose acoustic wave frequency and/or wavelength has been determined.

Advantageously, the location system, preferably the, or each, mobile device, is configured to determine the physical location, preferably the room or bay location, of the mobile device from the determined electromagnetic emitter data.

Preferably, the location, more preferably the room or bay location, of the mobile device is determined to be the same location, preferably the same room or bay location, as the location of the electromagnetic emitter that emitted the determined electromagnetic emitter data.

Preferably the location, more preferably the room location, of the mobile device is determined to be the same location, preferably the same room or bay location, as the location of the acoustic wave emitter that emitted the acoustic wave having the determined acoustic wave frequency and/or wavelength.

In preferred embodiments, the data indicative of a frequency and/or wavelength of an acoustic wave comprises a code representing the frequency and/or wavelength, or data denoting the actual frequency and/or wavelength.

Preferably, the, or each, mobile device is configured to receive each electromagnetic signal prior to detecting each associated acoustic wave.

Each electromagnetic emitter may, for example, be configured to emit its electromagnetic signal prior to the associated acoustic wave emitter emitting its acoustic wave.

Advantageously, the association between an acoustic wave emitter and an electromagnetic emitter may comprise that acoustic wave emitter and that electromagnetic emitter both being substantially in the same location and/or in the same room and/or in the same emitter apparatus.

In some preferred embodiments of the invention, the location system is configured to have a single acoustic wave emitter located in each of a plurality of rooms, preferably thereby to enable the location of the mobile device in a specific one of the plurality of rooms.

In preferred embodiments of the invention, each acoustic wave emitter of the location system, or each acoustic wave emitter of a subset of the system, is configured to emit an acoustic wave having a unique frequency and wavelength selected from a plurality of possible acoustic wave frequencies and wavelengths of the system, or of a subset of the system, respectively.

The location system according to the invention preferably is configured to have a single electromagnetic emitter located in each of a plurality of rooms.

In at least some preferred embodiments of the invention, each electromagnetic emitter includes, or is in communication with, a sensor, preferably an infrared sensor, to sense physical movement and/or the presence of a person, in the vicinity of the electromagnetic emitter, and configured to activate the electromagnetic emitter, e.g. from a dormant and/or low-power mode of operation. Advantageously, the activated electromagnetic emitter may be configured to emit an electromagnetic signal to activate the mobile device, upon activation of the electromagnetic emitter.

In some preferred embodiments, the location system may further comprise a plurality of acoustic wave receivers configured to monitor the acoustics of the physical environment of the location system, preferably thereby to enable the selection of an appropriate and/or optimised frequency and wavelength of acoustic wave to be emitted by each acoustic wave emitter.

Advantageously, the or each mobile device of the location system may be configured to measure received signal strength (e.g. RSSI) of the received electromagnetic signals and/or of the detected acoustic waves. Preferably, the location system is configured to determine at least an approximate distance between the mobile device and the emitter of a said electromagnetic signal and/or acoustic wave from the received signal strength of the electromagnetic signal and/or the acoustic wave. Additionally or alternatively, the or each mobile device of the location system may be configured to measure the time of flight of the detected acoustic waves to determine at least an approximate distance between the mobile device and the emitter of a said acoustic wave. Advantageously, the location system may be configured to use the determined at least approximate distance to assist, and/or to check for error, in the determination of the physical location of the mobile device, for example.

Advantageously, the mobile device may be configured to employ a "hysteresis" in location determination when the location of the mobile device changes (i.e. is moved from one location to another location). For example, the mobile device may be configured to require a minimum threshold RSSI, or change in RSSI, of acoustic wave and/or electromagnetic signal, and/or a minimum threshold change in measured acoustic wave time of flight, to determine that its location has changed.

In preferred embodiments of the invention, the location system further comprises a location engine (e.g. at least one server) configured to determine and/or monitor and/or report the location of the, or each, mobile device.

In some preferred embodiments of the invention, the location system may comprise a plurality of sets of a plurality of acoustic wave emitters, the acoustic wave emitters of each set configured to direct acoustic waves in different directions to each other. For example, each set of acoustic wave emitters may comprise a pair of acoustic wave emitters. Preferably, in such embodiments, the, or each, mobile device is configured to measure the received signal strength and/or the time of flight of the detected acoustic waves to determine at least an approximate distance between the mobile device and each acoustic wave emitter of a set of acoustic wave emitters. Advantageously, the mobile device may configured to carry out the distance determination a plurality of times, and the location system, e.g. the mobile device, may configured thereby to determine at least an approximate direction of movement of the mobile device relative to the acoustic wave emitters of the set, e.g. the entering or exiting of a room. For example, each room (or a plurality of rooms) of a building where the location system is operational may contain at least one acoustic wave emitter configured to direct acoustic waves into the room, and at least one other acoustic wave emitter configured to direct acoustic waves to an entrance (e.g. a doorway) to the room. The acoustic wave emitters may be configured to enable the determination of whether a mobile device (and hence a person carrying the mobile device) is entering or exiting the room.

The second aspect of the invention provides a method of locating at least one mobile device using a location system according to the first aspect of the invention, comprising: (a) each acoustic wave emitter emitting an acoustic wave having at least one acoustic wave frequency and wavelength; (b) each electromagnetic emitter emitting an electromagnetic signal that includes electromagnetic emitter data related to that electromagnetic emitter and data indicative of at least one frequency and/or wavelength of an acoustic wave emitted by a said acoustic wave emitter that is associated with that electromagnetic emitter; and (c) the mobile device detecting the acoustic waves and receiving the electromagnetic signals, and determining the at least one frequency and/or wavelength of a detected acoustic wave and comparing the determined at least one acoustic wave frequency and/or wavelength with the data included in each received electromagnetic signal, thereby determining which received electromagnetic emitter data was included in the electromagnetic signal which also included the data indicative of the at least one frequency and/or wavelength of the detected acoustic wave.

According to the method, the location system, preferably the, or each, mobile device, preferably determines the identity and/or the physical location, preferably the room or bay location, of the electromagnetic emitter which is associated with the acoustic wave emitter whose acoustic wave frequency and/or wavelength has been determined. The location system, preferably the mobile device, preferably determines the physical location, preferably the room location, of the mobile device from the determined electromagnetic emitter data.

Preferably, the mobile device receives each electromagnetic signal prior to detecting each associated acoustic wave.

Each electromagnetic emitter may, for example, emit its electromagnetic signal prior to the associated acoustic wave emitter emitting its acoustic wave.

Preferred embodiments of the invention will now be described, by way of example, with reference to the accompanying drawings, of which:
Figure 1 is a schematic illustration of a first embodiment of a location system according to the invention;
Figure 2 is a schematic illustration of a second embodiment of a location system according to the invention;
Figure 3 is a schematic illustration of at least some of the main functional components of an embodiment of a combined acoustic wave and electromagnetic emitter of a location system according to the invention; and
Figure 4 is a schematic illustration of at least some of the main functional components of an embodiment of a mobile device of a location system according to the invention.

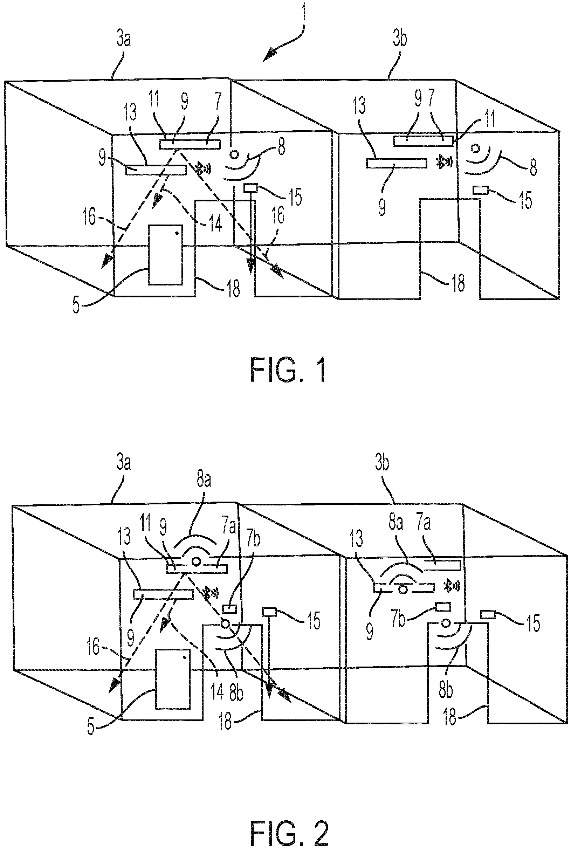

Figure 1 shows, schematically, a first embodiment of a location system 1 according to the invention, in use in two rooms 3a and 3b, of a building. The location system 1 comprises at least one mobile device 5 (schematically shown oversize), a plurality of acoustic wave emitters 7, and a plurality of electromagnetic emitters 9. In particular, in the embodiment shown in Figure 1, the location system 1 includes a plurality of combined ultrasound and Bluetooth Low Energy (BLE) emitter apparatuses 11, and a plurality of low frequency (LF) emitter devices 13. The ultrasound emitters are acoustic wave emitters 7, and the BLE and LF emitters are each electromagnetic emitters 9. Each room 3a, 3b, contains a respective single combined ultrasound and BLE emitter apparatus 11, and a respective single LF emitter device 13, and therefore each room contains a respective single acoustic wave emitter 7 and a respective single electromagnetic emitter 9 of each of two types (LF and BLE). Although in Figure 1 a separate apparatus 11 and device 13 is shown in each room, preferably each room contains a single combined apparatus comprising the ultrasound emitter, the BLE emitter and the LF emitter. Alternatively, the ultrasound emitter, BLE emitter and LF emitter may be in separate individual devices, or in any combination of devices or apparatuses. Additionally, each room 3a, 3b preferably contains a respective infrared sensor 15, more preferably a passive infrared (PIR) sensor. The mobile device(s) 5 may, for example, be tags, transponders or mobile communications and/or computer devices (e.g. mobile phones or cell phones), and they may be active and/or passive.

As described above, each ultrasound acoustic wave emitter 7 is configured to emit an ultrasound acoustic wave 8 having an acoustic wave frequency and wavelength, preferably a single frequency and wavelength of a continuous wave (or alternatively a range, or chirp, of frequencies/wavelengths). The ultrasound acoustic wave emitter 7 of each room 3a, 3b is configured to emit an ultrasound acoustic wave 8 having a unique frequency and wavelength (or alternatively a unique range, or chirp, of frequencies/wavelengths) selected from a plurality of possible ultrasound acoustic wave frequencies and wavelengths of the location system 1. Consequently, each room 3a, 3b has its own unique ultrasound frequency/wavelength. (In larger buildings, the location system 1 may comprise a plurality of system subsets, for example, each subset having a unique ultrasound frequency/wavelength for each room, but different subsets of the system - e.g. groups of rooms in different parts of the building - both using the same series of ultrasound frequencies/wavelengths.)

Each low frequency (LF) electromagnetic emitter 13 is configured to emit a LF signal 14 that includes LF electromagnetic emitter data related to that LF electromagnetic emitter 13 and data indicative of a frequency and/or wavelength of the ultrasound acoustic wave 8 emitted by the ultrasound acoustic wave emitter 7 located in the same room as that LF electromagnetic emitter 13. For example, the data related to that LF electromagnetic emitter 13 may comprise data identifying that LF electromagnetic emitter 13 and/or the physical location of that LF electromagnetic emitter, for example the room 3a where the LF electromagnetic emitter 13 is located. The data indicative of a frequency and/or wavelength of the ultrasound acoustic wave 8 generally either comprises a code representing the frequency and/or wavelength, or data denoting the actual frequency and/or wavelength of the ultrasound acoustic wave 8.

(In alternative embodiments of the invention, each Bluetooth Low Energy (BLE) electromagnetic emitter is configured to emit a BLE signal 16 that includes BLE electromagnetic emitter data related to that BLE electromagnetic emitter and data indicative of a frequency and/or wavelength of the ultrasound acoustic wave 8 emitted by the ultrasound acoustic wave emitter 7 located in the same room as that BLE electromagnetic emitter. The data related to that BLE electromagnetic emitter may comprise data identifying that BLE electromagnetic emitter and/or the physical location of that BLE electromagnetic emitter, for example the room where the BLE electromagnetic emitter is located.)

The mobile device 5 is configured to detect the ultrasound acoustic waves 8 and to receive the LF and BLE electromagnetic signals 14 and 16. Because RF signals, such as LF and BLE signals, can frequently propagate through walls, floors and ceilings, the mobile device 5 will generally receive LF and BLE signals from not only the room where it is currently located, but also from outside that room, e.g. in one or more neighbouring rooms. However, ultrasound acoustic waves are generally unable to propagate through walls, floors and ceilings, and therefore the mobile device 5 will generally detect only the ultrasound acoustic wave 8 emitted by the ultrasound acoustic wave emitter 7 located in the room where the mobile device 5 is currently located (i.e. the same room).

The mobile device 5 is also configured to determine the frequency and/or wavelength (or range, or chirp, thereof) of a detected ultrasound acoustic wave 8 and to compare the determined ultrasound acoustic wave frequency and/or wavelength (or range, or chirp) with the data included in each LF signal that the mobile device 5 receives. (Or alternatively, to compare the determined ultrasound acoustic wave frequency and/or wavelength with the data included in each BLE signal that the mobile device 5 receives, depending on the system.) The mobile device 5 is additionally configured to determine which received LF (or alternatively BLE) electromagnetic emitter data was included in the LF (or alternatively BLE) electromagnetic signal which also included the data indicative of the frequency and/or wavelength of the ultrasound acoustic wave 8 that the mobile device 5 detected. By "matching" the frequency and/or wavelength (or range, or chirp, or chirp signature) of the detected ultrasound acoustic wave 8 with the particular electromagnetic emitter data which contained the indication of that particular ultrasound frequency/wavelength (or range, or chirp, or chirp signature), the mobile device 5 thereby determines its current room location (because, as explained above, the detected ultrasound acoustic wave 8 will have been emitted in the same room as the current room location of the mobile device 5).

As indicated above, the mobile device 5 may advantageously also be configured to measure received signal strength (e.g. RSSI, Received Signal Strength Indication) of the received LF and/or BLE electromagnetic signals and/or of the detected ultrasound acoustic waves 8. Such received signal strength measurements may be used to determine at least an approximate distance between the mobile device 5 and the emitter of the LF/BLE electromagnetic signal and/or ultrasound acoustic wave 8. Additionally or alternatively, the mobile device 5 may be configured to measure the time of flight (based on the time of arrival) of the detected ultrasound acoustic wave 8 to determine at least an approximate distance between the mobile device 5 and the ultrasound acoustic wave emitter 7. In order to measure the time of flight of the ultrasound acoustic wave 8, the associated LF and/or BLE electromagnetic signal data needs to include an indication of the time when the ultrasound acoustic wave 8 is emitted. Advantageously, the location system may be configured to use such at least approximately determined distances to assist, and/or to check for error, in the determination of the physical location of the mobile device(s), for example.

A preferred mode of operation of the location system 1 will now be described. When a person enters a room (e.g. room 3a in Figure 1) carrying a mobile device 5, the infrared sensor 15 senses the motion of the person and activates ("wakes up") the emitters 7, 9, 11 and/or 13 from a dormant and/or low-power mode of operation. The low frequency emitter 13 then emits a LF (e.g. 125 kHz) signal 14 to activate ("wake up") the mobile device 5 from a dormant and/or low-power mode of operation. The low frequency emitter 13 also emits a LF signal 14 that includes LF electromagnetic emitter data related to that LF electromagnetic emitter 13, data indicating the frequency or wavelength of the ultrasound acoustic wave 8 emitted (or to be emitted) by the ultrasound acoustic wave emitter 7 located in the same room as that LF electromagnetic emitter 13, and optionally data indicating the time when that ultrasound acoustic wave 8 will be emitted. The data related to that LF electromagnetic emitter 13 preferably comprises data identifying that LF electromagnetic emitter 13, and at least comprises the room 3a (or, more generally, the physical location) where the LF electromagnetic emitter 13 is located. The BLE emitter preferably also emits a BLE advertisement signal, and the ultrasound acoustic wave emitter emits a single frequency/wavelength continuous wave ultrasound acoustic wave at the frequency/wavelength designated for that room 3a, and as indicated in the LF signal.

The mobile device 5 performs the following procedure. The mobile device 5 receives the LF and BLE signals, and any other LF and BLE signals that may have propagated to that room 3a from one or more other rooms or locations in the building. The mobile device 5 also detects the ultrasound acoustic wave 8 emitted by the ultrasound acoustic wave emitter 7 located in the room 3a that the person carrying the mobile device 5 has entered. The mobile device 5 measures the RSSI of the received LF signal(s) (and preferably also the RSSI of the received BLE signal(s)), measures the RSSI and/or time of flight of the ultrasound acoustic wave 8, and determines the frequency or wavelength of the ultrasound acoustic wave 8. The mobile device 5 determines which received LF electromagnetic emitter data was included in the LF electromagnetic signal which also included the data indicating the frequency or wavelength of the ultrasound acoustic wave 8 that the mobile device 5 has detected, and the mobile device 5 thereby determines its current room location from the room location data contained in that LF electromagnetic emitter data. The mobile device 5 also carries out an error-checking procedure of determining at least approximate distances to the various emitters whose RSSI and time of flight it has measured, to check whether or not its room location determination is consistent with such measured distances. If an inconsistency is found, this procedure may be repeated until a consistent result is obtained. Finally, the mobile device 5 preferably reports its location (e.g. via Wi-Fi ^{™} or BLE) to a location engine (e.g. a server) of the location system 1.

Figure 2 is a schematic illustration of a second embodiment of a location system 1 according to the invention, which is a variation on the first embodiment of Figure 1. Like reference numerals indicate like, or functionally similar, features and components. In the embodiment of Figure 2, each room 3a, 3b, contains a pair of ultrasound acoustic wave emitters 7a, 7b configured to direct ultrasound acoustic waves in different directions to each other. One ultrasound acoustic wave emitter 7a in each room 3a, 3b is configured to direct ultrasound acoustic waves 8a into the room, and the other ultrasound acoustic wave emitter 7b in each room 3a, 3b is configured to direct ultrasound acoustic waves 8b to an entrance/exit 18 (e.g. a doorway) to the room, as illustrated. The mobile device 5 is configured to measure the received signal strength and/or the time of flight of the detected ultrasound acoustic waves 8a and 8b to determine at least an approximate distance between the mobile device 5 and each ultrasound acoustic wave emitter 7a, 7b of the pair. The mobile device 5 preferably is configured to carry out the distance determination a plurality of times, and the location system 1, e.g. the mobile device 5, preferably is configured thereby to determine at least an approximate direction of movement of the mobile device 5 relative to the ultrasound acoustic wave emitters 7a, 7b of the pair. This preferably enables the determination of whether the mobile device 5 (and hence a person carrying the mobile device 5) is entering or exiting the room.

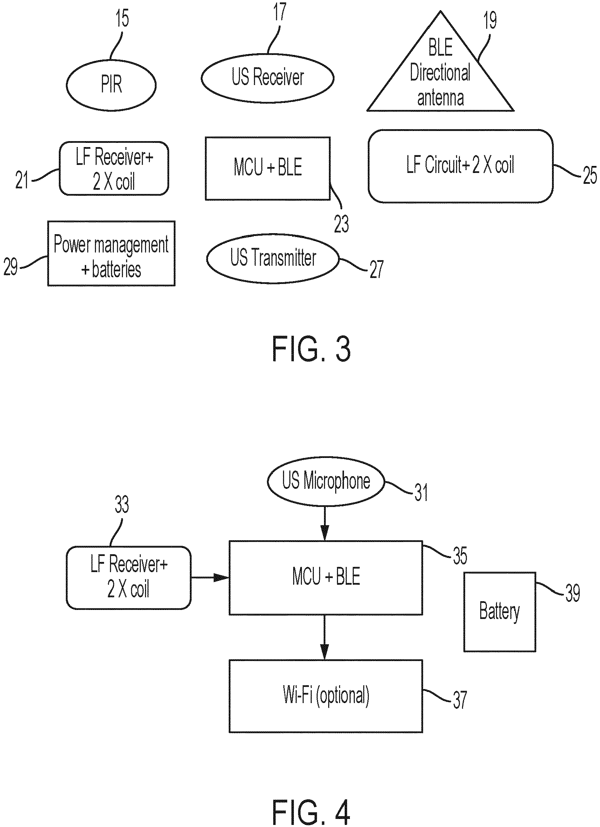

Figure 3 is a schematic illustration of at least some of the main functional components of a preferred embodiment of a combined ultrasound acoustic wave and electromagnetic emitter of a location system 1 according to the invention. The combined emitter comprises a passive infrared receiver (PIR) 15, an ultrasound (US) receiver 17, a BLE directional antenna 19, a LF receiver 21, a microcontroller (MCU) and BLE unit 23, a LF circuit 25, an ultrasound (US) transmitter 27, and a power management unit 29, preferably including one or more batteries. The ultrasound receiver 17 is for noise immunity; it "listens" to the environment around it and preferably enables the selection of an appropriate and/or optimised ultrasound frequency/wavelength to be emitted, preferably dynamically and automatically. The LF receiver 21 preferably is for emitter-to-emitter communication.

Figure 4 is a schematic illustration of at least some of the main functional components of an embodiment of a mobile device 5 of a location system 1 according to the invention. The mobile device 5 comprises an ultrasonic (US) microphone 31, a LF receiver 33, a microcontroller (MCU) and BLE unit 35, an optional Wi-Fi ^{™} unit 37, and a battery 39.

It will be understood that the above description and the drawings are examples of particular implementations of the invention, but that other implementations of the invention are included in the scope of the claims.

## Claims

1. An indoor location system for locating at least one mobile device, comprising a plurality of acoustic wave emitters, a plurality of electromagnetic emitters, and at least one mobile device; wherein:
(a) each acoustic wave emitter is configured to emit an acoustic wave having at least one acoustic wave frequency and wavelength;
(b) each electromagnetic emitter is configured to emit an electromagnetic signal that includes electromagnetic emitter data related to that electromagnetic emitter and data indicative of at least one frequency and/or wavelength of an acoustic wave emitted by a said acoustic wave emitter that is associated with that electromagnetic emitter; and
(c) the mobile device is configured to detect the acoustic waves and to receive the electromagnetic signals, and to determine the at least one frequency and/or wavelength of a detected acoustic wave and to compare the at least one determined acoustic wave frequency and/or wavelength with the data included in each received electromagnetic signal, thereby to determine which received electromagnetic emitter data was included in the electromagnetic signal which also included the data indicative of the at least one frequency and/or wavelength of the detected acoustic wave.

2. A location system according to Claim 1, wherein each acoustic wave emitter is an ultrasound emitter and each acoustic wave is an ultrasound wave.

3. A location system according to Claim 1 or Claim 2, wherein each acoustic wave is a continuous wave having substantially a single frequency and a single wavelength, or comprises a plurality or range or chirp of frequencies and wavelengths, and optionally the determination of at least one frequency and/or wavelength of a detected acoustic wave comprises the determination of at least one frequency and/or wavelength of a plurality or range of frequencies and wavelengths, and further optionally comprises the determination of a chirp signature of a chirp of frequencies and wavelengths.

4. A location system according to any preceding claim, wherein: each electromagnetic emitter is a radio frequency (RF) electromagnetic emitter, e.g. a near-field RF emitter and/or a far-field RF emitter, preferably an electromagnetic inductor and/or a magnetic inductor and/or a radio wave emitter; and/or each electromagnetic emitter is a low frequency (LF) electromagnetic emitter and/or a Bluetooth Low Energy (BLE) emitter, and each electromagnetic signal is a low frequency (LF) signal or a Bluetooth Low Energy (BLE) signal.

5. A location system according to any preceding claim, wherein the electromagnetic emitter data related to each electromagnetic emitter comprises data identifying that electromagnetic emitter and/or the physical location of that electromagnetic emitter, preferably the room or bay where the electromagnetic emitter is located.

6. A location system according to any preceding claim, wherein the location system, preferably the mobile device, is configured to determine the identity and/or the physical location, preferably the room or bay location, of the electromagnetic emitter which is associated with the acoustic wave emitter whose at least one acoustic wave frequency and/or wavelength has been determined.

7. A location system according to any preceding claim, wherein the location system, preferably the mobile device, is configured to determine the physical location, preferably the room or bay location, of the mobile device from the determined electromagnetic emitter data.

8. A location system according to any preceding claim, wherein the location, preferably the room location, of the mobile device is determined to be the same location, preferably the same room or bay location, as the location of the electromagnetic emitter that emitted the determined electromagnetic emitter data.

9. A location system according to any preceding claim, wherein the location, preferably the room or bay location, of the mobile device is determined to be the same location, preferably the same room or bay location, as the location of the acoustic wave emitter that emitted the acoustic wave having the determined at least one acoustic wave frequency and/or wavelength.

10. A location system according to any preceding claim, wherein the data indicative of at least one frequency and/or wavelength of an acoustic wave comprises a code representing the at least one frequency and/or wavelength, or data denoting the actual at least one frequency and/or wavelength.

11. A location system according to any preceding claim, wherein the association between a said acoustic wave emitter and a said electromagnetic emitter comprises that acoustic wave emitter and that electromagnetic emitter both being substantially in the same location and/or in the same room and/or in the same emitter apparatus.

12. A location system according to any preceding claim, wherein each acoustic wave emitter of the system, or each acoustic wave emitter of a subset of the system, is configured to emit an acoustic wave having a unique at least one frequency and wavelength selected from a plurality of possible acoustic wave frequencies and wavelengths of the system, or of a subset of the system, respectively.

13. A location system according to any preceding claim, wherein: each electromagnetic emitter includes, or is in communication with, a sensor, preferably an infrared sensor, to sense physical movement and/or the presence of a person, in the vicinity of the electromagnetic emitter, and configured to activate the electromagnetic emitter, e.g. from a dormant and/or low-power mode of operation; and preferably wherein the activated electromagnetic emitter is configured to emit an electromagnetic signal to activate the mobile device, upon activation of the electromagnetic emitter.

14. A location system according to any preceding claim, wherein: the mobile device is configured to measure received signal strength of the received electromagnetic signals and/or of the detected acoustic waves; and preferably wherein the location system is configured to determine at least an approximate distance between the mobile device and the emitter of a said electromagnetic signal and/or acoustic wave from the received signal strength of the electromagnetic signal and/or the acoustic wave.

15. A location system according to any preceding claim, wherein the mobile device is configured to measure the time of flight of the detected acoustic waves to determine at least an approximate distance between the mobile device and the emitter of a said acoustic wave.

16. A method of locating at least one mobile device using a location system according to any preceding claim, comprising:
(a) each acoustic wave emitter emitting an acoustic wave having at least one acoustic wave frequency and wavelength;
(b) each electromagnetic emitter emitting an electromagnetic signal that includes electromagnetic emitter data related to that electromagnetic emitter and data indicative of at least one frequency and/or wavelength of an acoustic wave emitted by a said acoustic wave emitter that is associated with that electromagnetic emitter; and
(c) the mobile device detecting the acoustic waves and receiving the electromagnetic signals, and determining the at least one frequency and/or wavelength of a detected acoustic wave and comparing the determined at least one acoustic wave frequency and/or wavelength with the data included in each received electromagnetic signal, thereby determining which received electromagnetic emitter data was included in the electromagnetic signal which also included the data indicative of the at least one frequency and/or wavelength of the detected acoustic wave.

17. A plurality of acoustic wave emitters and electromagnetic emitters configured for use in a location system or method according to any preceding claim.
